(19) **Europäisches Patentamt / European Patent Office / Office européen des brevets**

(11) **EP 4 682 276 A1**

(12) **EUROPEAN PATENT APPLICATION**
published in accordance with Art. 153(4) EPC

(43) Date of publication:
**21.01.2026 Bulletin 2026/04**

(21) Application number: **24770610.4**

(22) Date of filing: **04.03.2024**

(51) International Patent Classification (IPC):
**C22C 19/05** *(2006.01)*   **B22F 1/00** *(2022.01)*
**B22F 3/24** *(2006.01)*   **B22F 10/28** *(2021.01)*
**B22F 10/64** *(2021.01)*   **B33Y 10/00** *(2015.01)*
**B33Y 70/00** *(2020.01)*   **C22F 1/00** *(2006.01)*
**C22F 1/10** *(2006.01)*

(52) Cooperative Patent Classification (CPC):
**B22F 1/00; B22F 3/24; B22F 10/28; B22F 10/64;
B33Y 10/00; B33Y 70/00; C22C 19/05; C22F 1/00;
C22F 1/10;** Y02P 10/25

(86) International application number:
**PCT/JP2024/008048**

(87) International publication number:
**WO 2024/190499 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023   JP 2023038818**

(71) Applicant: **KAWASAKI JUKOGYO KABUSHIKI
KAISHA**
**Kobe-shi, Hyogo 650-8670 (JP)**

(72) Inventors:
- **AZUMA, Makoto**
  **Hyogo, 650-8670 (JP)**
- **HIBINO, Shinya**
  **Hyogo, 650-8670 (JP)**
- **FUJIMITSU, Kazushige**
  **Hyogo, 650-8670 (JP)**
- **TAKANASHI, Naoto**
  **Hyogo, 650-8670 (JP)**

(74) Representative: **Dehns**
**10 Old Bailey**
**London EC4M 7NG (GB)**

(54) **NICKEL-BASED SUPERALLOY, NICKEL-BASED SUPERALLOY POWDER AND METHOD FOR PRODUCING SHAPED BODY**

(57)    A nickel-based superalloy according to one embodiment contains, in percent by mass, 13.50% to 15.50% Cr, 5.05% to 5.55% Mo, 5.75% to 6.25% W, 5.90% to 6.40% Ta, 2.70% to 3.00% Al, 0.010% to 0.060% Zr, 0.045% to 0.105% C, 0.002% to 0.010% B, up to 9.00% Co, up to 1.00% Nb, and up to 0.50% Ti.

FIG. 1

EP 4 682 276 A1

# EP 4 682 276 A1

## Description

### Technical Field

The present disclosure relates to a nickel-based superalloy and a nickel-based superalloy powder and further relates to a shaped article production method using the nickel-based superalloy powder.

### Background Art

Nickel-based superalloys are known to have excellent strength and oxidation resistance at high temperatures. For this reason, they are used in components that are exposed to high stresses in high-temperature oxidative environments. Examples of such components include turbines used in aircraft engines or thermal power stations. Among nickel-based superalloys, IN 738LC ("IN" is an abbreviation of Inconel™) is known as an alloy having excellent high-temperature strength attributed to $\gamma'$-phase precipitation strengthening.

For example, Patent Literature 1 describes producing a shaped article by additive manufacturing using a powder of IN 738LC. Additive manufacturing is a method including: spreading a powder to form a layer; applying an energy beam to the layer to melt and solidify at least a portion of the layer; and repeating the spreading of the powder and the applying of the energy beam to produce a shaped article.

### Citation List

### Patent Literature

PTL 1: Japanese Laid-Open Patent Application Publication No. 2015-224394

### Summary of Invention

### Technical Problem

In the additive manufacturing using a powder of IN 738LC, the shaped article produced could, depending on its shape, crack due to a tensile residual stress when subjected to a post-production heat treatment such as stress relief, solution treatment, or aging treatment.

It is therefore an object of the present disclosure to provide a nickel-based superalloy resistant to heat treatment-induced cracking. Another object of the present disclosure is to provide a nickel-based superalloy powder including particles of the nickel-based superalloy and further provide a shaped article production method using the nickel-based superalloy powder.

### Solution to Problem

In one aspect, the present disclosure provides a nickel-based superalloy containing, in percent by mass, 13.50% to 15.50% Cr, 5.05% to 5.55% Mo, 5.75% to 6.25% W, 5.90% to 6.40% Ta, 2.70% to 3.00% Al, 0.010% to 0.060% Zr, 0.045% to 0.105% C, 0.002% to 0.010% B, up to 9.00% Co, up to 1.00% Nb, and up to 0.50% Ti.

In another aspect, the present disclosure provides a nickel-based superalloy powder including particles of the nickel-based superalloy.

In yet another aspect, the present disclosure provides a shaped article production method including: spreading the nickel-based superalloy powder to form a layer; applying an energy beam to the layer to melt and solidify at least a portion of the layer; and repeating the spreading of the nickel-based superalloy powder and the applying of the energy beam to produce a shaped article.

### Advantageous Effects of Invention

The present disclosure provides: a nickel-based superalloy resistant to heat treatment-induced cracking; a nickel-based superalloy powder including particles of the nickel-based superalloy; and a shaped article production method using the nickel-based superalloy powder.

### Brief Description of Drawings

FIG. 1 is a schematic diagram of an additive manufacturing device.

FIG. 2 shows the shape of a test specimen used in a test for evaluating heat treatment-induced cracking.

FIG. 3 is a cross-sectional view taken along the line III-III of FIG. 2.

FIG. 4 is an enlarged image of a key part of a test specimen of Comparative Example 2.

**Description of Embodiments**

[Nickel-based superalloy]

The mechanism by which heat treatment-induced cracking occurs is inferred to be strain aging cracking as found in welded metals. A possible factor responsible for the strain aging cracking is intragranular strengthening attributed to precipitation of the $\gamma'$ phase which is a strengthening phase. Thus, the composition of a nickel-based superalloy according to one aspect of the present disclosure is defined based on the following objectives.

1. The volume fraction of the $\gamma'$ phase is minimized along with maximization of the level of solid solution strengthening within a compositional range over which high-temperature strength properties comparable to or better than those of IN 738 can be achieved.

2. The SAC (Strain Age Cracking) index, which is a measure of strain aging cracking, is controlled to be equal to or less than a value at or below which cracking does not occur.

The SAC index is defined by the equation shown below. This equation is presented in paragraph 0049 of the detailed description of invention of Japanese Patent No. 6377124. The paragraph teaches that the SAC index should be equal to or less than 3.9. Each of the element symbols such as "Al" in the equation represents the content in percent by mass of the corresponding element. It is known that strain aging cracking does not occur when the SAC index is equal to or less than 3.9.

$$\text{SAC index} = \text{Al} + 0.56\text{Ti} + 0.29\text{Nb} + 0.15\text{Ta}$$

The present inventors have found that the amount of cracks formed during a rapid solidification process in additive manufacturing (such cracks will be hereinafter referred to as solidification cracks) decreases as the freezing range (hereinafter abbreviated as FR), which is the difference between the liquidus and solidus temperatures during the rapid solidification, becomes narrower. From this perspective, the composition of the nickel-based superalloy is desirably defined in a way that narrows the FR to a certain extent.

Specifically, the Ni-based superalloy according to one aspect of the present disclosure contains, in percent by mass, 13.50% to 15.50% Cr, 5.05% to 5.55% Mo, 5.75% to 6.25% W, 5.90% to 6.40% Ta, 2.70% to 3.00% Al, 0.010% to 0.060% Zr, 0.045% to 0.105% C, and 0.002% to 0.010% B as essential components other than Ni. The symbol "%" as used hereinafter means "% by mass".

The nickel-based superalloy may contain at least one of up to 9.00% Co, up to 1.00% Nb, and up to 0.50% Ti as another optional component. The balance of the nickel-based superalloy, namely the remainder excluding the components mentioned above, is constituted by Ni and inevitable impurities. The inevitable impurities include Si, Mn, P, S, Cu, Fe, O, and N.

In the nickel-based superalloy having the composition described above, Cr has an oxidation resistance-enhancing effect and a solid solution strengthening effect on the nickel solid solution phase. Thus, controlling the Cr content to 13.50% or more allows the nickel-based superalloy to excel in oxidation resistance and mechanical strength. However, addition of an excess of Cr leads to precipitation of an unsound phase which causes a decline in strength properties. Thus, controlling the Cr content to 15.50% or less can prevent precipitation of an unsound phase.

In the nickel-based superalloy having the composition described above, Mo has a solid solution strengthening effect on the nickel solid solution phase. Thus, controlling the Mo content to 5.05% or more allows the nickel-based superalloy to excel in mechanical strength. However, addition of an excess of Mo leads to precipitation of an unsound phase which causes a decline in strength properties. Thus, controlling the Mo content to 5.55% or less can prevent precipitation of an unsound phase.

In the nickel-based superalloy having the composition described above, W has a solid solution strengthening effect on the nickel solid solution phase. Thus, controlling the W content to 5.75% or more allows the nickel-based superalloy to excel in mechanical strength. However, addition of an excess of W leads to precipitation of an unsound phase which causes a decline in strength properties. Thus, controlling the W content to 6.25% or less can prevent precipitation of an unsound phase.

In the nickel-based superalloy having the composition described above, Ta has a solid solution strengthening effect on the γ' phase, and the volume fraction of the γ' phase increases with increasing Ta content. Thus, controlling the Ta content in the range of 5.90% to 6.40% allows the SAC index to fall within a given range while increasing the volume fraction of the γ' phase.

In the nickel-based superalloy having the composition described above, Al has a γ' phase-forming effect, and the volume fraction of the γ' phase increases with increasing Al content. Thus, controlling the Al content in the range of 2.70% to 3.00% allows the SAC index to fall within a given range while increasing the volume fraction of the γ' phase.

In the nickel-based superalloy having the composition described above, Zr has an FR-widening effect. Thus, controlling the Zr content to 0.060% or less can prevent the FR from becoming too wide. Meanwhile, Zr has an enhancing effect on ductility at high temperatures. Thus, controlling the Zr content to 0.010% or more makes it possible to achieve suitable ductility at high temperatures.

In the nickel-based superalloy having the composition described above, C has an FR-narrowing effect. Thus, controlling the C content to 0.045% or more leads to the nickel-based superalloy having a narrow FR and being resistant to the formation of solidification cracks. However, C could react with other metal elements to form carbides at grain boundaries, thus causing a reduction in corrosion resistance and in toughness. Thus, controlling the C content to 0.105% or less can reduce the formation of carbides at grain boundaries.

In the nickel-based superalloy having the composition described above, B has an enhancing effect on ductility at high temperatures. Thus, controlling the B content to 0.002% or more leads to the nickel-based superalloy having improved ductility at high temperatures. However, B has an FR-widening effect. Thus, controlling the B content to 0.010% or less can reduce the formation of solidification cracks.

In the nickel-based superalloy having the composition described above, Co has a solid solution strengthening effect on the nickel solid solution phase. However, addition of an excess of Co leads to precipitation of an unsound phase which causes a decline in strength properties. Thus, controlling the Co content to 9.00% or less can prevent precipitation of an unsound phase. In addition, Co has a reducing effect on the volume fraction of the γ' phase although this effect is slight. Thus, it is more preferable to control the Co content to 0.50% or less so that an excessive reduction in the volume fraction of the γ' phase can be prevented.

Nb has an SAC index-increasing effect. Thus, in order to reduce the occurrence of strain aging cracking, the Nb content is controlled to 1.00% or less. More preferably, the Nb content is 0.10% or less.

Ti has an SAC index-increasing effect. Thus, in order to reduce the occurrence of strain aging cracking, the Ti content is controlled to 0.50% or less. More preferably, the Ti content is 0.10% or less.

That the nickel-based superalloy has the composition described above can be confirmed by energy dispersive X-ray spectroscopy (EDX), wavelength dispersive X-ray spectroscopy (WDS), X-ray fluorescence spectroscopy (XRF), high-frequency inductively coupled plasma (ICP) emission spectroscopy, combustion infrared absorption spectroscopy, heating-melting infrared absorption spectroscopy, or wet chemical analysis.

[Nickel-based superalloy powder]

A nickel-based superalloy powder according to another aspect of the present disclosure includes particles of a nickel-based superalloy having the composition described above. The use of the nickel-based superalloy powder in additive manufacturing can reduce the occurrence of heat treatment-induced cracking.

There are no particular limitations on the particle size of the nickel-based superalloy powder and the shape of the particles of the powder. The particle size may be, for example, such that the particles can pass through a sieve with a nominal opening size of 106 μm as specified in JIS Z 8801 (2019). The particle size is preferably such that the particles can pass through a sieve with a nominal opening size of 75 μm, 63 μm, or 53 μm. The particle size may be at least 1 μm and is preferably at least 5 μm, at least 15 μm, or at least 25 μm. The shape of the particles may be, for example, spherical.

There are no particular limitations on how to produce the nickel-based superalloy powder. The method used may be selected as appropriate from among known metal powder production methods which can give a powder having a given particle size and a given particle shape. An example is gas atomization in which a jet of high-pressure gas is applied to a molten metal to cool the molten metal and obtain metal particles. The gas atomization is advantageous in that spherical particles can be obtained along with inhibition of oxidation of the metal. The nickel-based superalloy powder obtained may itself be used to produce a shaped article. Alternatively, the particles of the nickel-based superalloy powder may be classified according to size by sieves or any other means, and then the classified powder with a uniform particle size may be used to produce a shaped article.

[Method of producing shaped article]

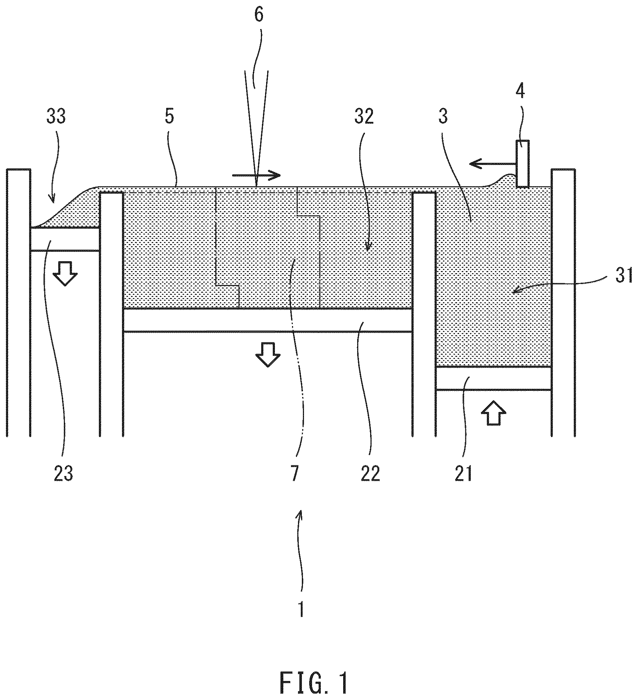

A shaped article production method according to yet another aspect of the present disclosure is a production method which, as shown in FIG. 1, includes: spreading the nickel-based superalloy powder 3 described above to form a layer 5; applying an energy beam 6 to the layer 5 to melt and solidify at least a portion of the layer 5; and repeating the spreading of the nickel-based superalloy powder 3 and the applying of the energy beam 6 to produce a shaped article 7. The shaped article 7 obtained by this production method does not suffer from heat treatment-induced cracking.

The production method is implemented, for example, using an additive manufacturing device 1 as shown in FIG. 1. The additive manufacturing device used in the production method is not limited to this device 1 and may be selected as appropriate from among known metal additive manufacturing devices.

The additive manufacturing device 1 includes: a reservoir 31 holding the nickel-based superalloy powder 3; a shaping chamber 32 adjacent to the reservoir 31; and a collector 33 located across the shaping chamber 32 from the reservoir 31. The additive manufacturing device 1 further includes: a feeding piston 21 forming the bottom of the reservoir 31; a shaping piston 22 forming the bottom of the shaping chamber 32; and a collecting piston 23 forming the bottom of the collector 33. The additive manufacturing device 1 further includes: a recoater 4 that moves from a point above the reservoir 31 to a point above the collector 33; and an energy beam emitter that is located above the shaping chamber 32 and that emits the energy beam 6.

In the additive manufacturing device 1, first, the piston 21 ascends to elevate the nickel-based superalloy powder 3 by a given height in the reservoir 31. Next, the recoater 4 moves to feed the elevated nickel-based superalloy powder 3 to the shaping chamber 32 and spread the nickel-based superalloy powder 3 over a flat surface, thereby forming the layer 5. An excess of the nickel-based superalloy powder 3 is carried by the moving recoater 4 and falls into the collector 33. After that, the energy beam 6 is applied to the layer 5 along a given pattern, and thus at least a portion of the layer 5 melts and solidifies. As a result, a specific cross-section of the shaped article 7 is formed. These steps are repeated to stack specific cross-sections on one another and thus produce the shaped article 7.

In the application of the energy beam 6 to the layer 5 along a given pattern, the energy beam 6 is caused to traverse the surface of the layer 5 at a given pitch and a given speed. For example, the energy beam 6 is a laser beam or an electron beam.

The shaped article 7 produced may be heat-treated. Examples of heat treatments that may be performed on the shaped article 7 include solution treatment and aging treatment. The solution treatment and the aging treatment are performed in this order. The solution treatment and the aging treatment may be performed separately using different heat treatment devices or may be performed successively using the same heat treatment device. Before the solution treatment, a heat treatment such as stress relief or HIP (Hot Isostatic Pressing) treatment may be performed on the shaped article 7.

For example, the solution treatment may be one in which the shaped article 7 is held at a temperature of 1150 to 1250 °C for 30 minutes to 5 hours and then cooled to 600 °C or below. This cooling is preferably completed in a relatively short time (rapid cooling). The aging treatment may be one in which the shaped article 7 having undergone the solution treatment is held at a temperature of 600 to 1050 °C for 6 to 48 hours and then cooled to room temperature. This cooling is also preferably completed in a relatively short time (rapid cooling).

The aging treatment may be performed a plurality of times. For example, the shaped article 7 may be subjected to a first aging treatment in which the shaped article 7 is held at a temperature of 850 to 1050 °C for 2 to 6 hours, after which the shaped article 7 may be subjected to a second aging treatment in which the shaped article 7 is held at a temperature of 600 to 850 °C for 4 to 46 hours. The first aging treatment and the second aging treatment may be performed successively. Alternatively, the shaped article 7 may be cooled to 400 °C or below (e.g., room temperature) between the first aging treatment and the second aging treatment. This cooling is also preferably completed in a relatively short time (rapid cooling).

There are no particular limitations on the heat treatment atmosphere in which the solution treatment or the aging treatment is performed. For example, the heat treatment atmosphere may be a vacuum, argon, or air atmosphere. The cooling (rapid cooling) may be water cooling, air cooling, oil cooling, or gas fan cooling.

**Examples**

Hereinafter, the present disclosure will be described using examples. The present disclosure is not limited to the examples given below.

[Example 1]

A nickel-based superalloy powder was prepared which had an alloy composition of Co: 0.3%, Cr: 14.6%, Mo: 5.3%, W: 6.15%, Nb: 0.02%, Ta: 6.1%, Al: 2.9%, Ti: 0.005%, Zr: 0.06%, C: 0.095%, and B: 0.008%, with the balance being Ni and inevitable impurities. The particle size distribution was as follows: d10 = 21.64 $\mu$m, d50 = 34.09 $\mu$m, and d90 = 52.53 $\mu$m.

The nickel-based superalloy powder was charged into an additive manufacturing device (M290, manufactured by EOS), by which a first shaped article was produced at a laser output of 210 W, a scan speed of 1200 mm/s, a scan pitch of 60 $\mu$m, and a layer thickness of 40 $\mu$m. A second shaped article was also produced at a laser output of 270 W, a scan speed of 1000 mm/s, and a scan pitch of 110 $\mu$m. The first shaped article was in the shape of a rectangular parallelepiped having a length of 60 mm, a width of 10 mm, and a height (layer-stacking direction) of 10 mm, and the second shaped article was in the shape of a rectangular parallelepiped having a length of 6 mm, a width of 5 mm, and a height (layer-stacking direction) of 10 mm.

The second shaped article was not subjected to any heat treatment, whereas the first shaped article was heat-treated as follows. First, the first shaped article was placed in a heat treatment furnace and subjected to solution treatment, in which the shaped article was held at 1200 °C for 2 hours while the atmosphere inside the heat treatment furnace was kept filled with argon at 50 to 70 Pa and then the shaped article was rapidly cooled to room temperature by gas fan cooling using argon at 400 kPa. Subsequently, the first shaped article was subjected to aging treatment, in which the first shaped article was held at 850 °C for 24 hours while the atmosphere inside the heat treatment furnace was kept filled with argon at 50 to 70 Pa and then the first shaped article was rapidly cooled to room temperature by gas fan cooling using argon at 400 kPa.

[Comparative Example 1]

A heat-treated first shaped article and a non-heat-treated second shaped article were obtained in the same manner as in Example 1, except that the nickel-based superalloy powder used was a commercially-available IN 738LC powder and that the heat treatments described below were performed. The particle size distribution of the nickel-based superalloy powder was as follows: d10 = 29.66 $\mu$m, d50 = 44.90 $\mu$m, d90 = 66.66 $\mu$m.

The heat treatments performed on the first shaped article included HIP treatment prior to solution treatment. In the HIP treatment, the atmosphere inside the heat treatment furnace was filled with argon at 104 MPa, and the first shaped article was held at 1204 °C for 4 hours and then slowly cooled to room temperature. In the solution treatment subsequent to the HIP treatment, the first shaped article was held at 1204 °C for 2 hours while the atmosphere inside the heat treatment furnace was kept filled with argon at 50 to 70 Pa, and then the first shaped article was rapidly cooled to room temperature by gas fan cooling using argon at 400 kPa. In aging treatment subsequent to the solution treatment, the shaped article was held at 843 °C for 24 hours while the atmosphere inside the heat treatment furnace was kept filled with argon at 50 to 70 Pa, and then the shaped article was rapidly cooled to room temperature by gas fan cooling using argon at 400 kPa.

[Comparative Example 2]

A non-heat-treated second shaped article was obtained in the same manner as in Comparative Example 1, except that the nickel-based superalloy powder used was a commercially-available IN 738LC powder different from that used in Comparative Example 1. The particle size distribution of the nickel-based superalloy powder was as follows: d10 = 19.65 $\mu$m, d50 = 29.07 $\mu$m, d90 = 44.41 $\mu$m.

[Compositions]

The compositions of the nickel-based superalloy powders used in Example 1 and Comparative Examples 1 and 2 are shown in Table 1. The compositions shown are those presented in the mill test reports.

[Table 1]

| | | | | | | | | | | | | Unit: % by mass |
|---|---|---|---|---|---|---|---|---|---|---|---|---|
| | Cr | Mo | W | Ta | Al | Zr | C | B | Co | Nb | Ti | Ni |
| Ex. 1 | 14.62 | 5.33 | 6.17 | 6.12 | 2.86 | 0.057 | 0.093 | 0.008 | 0.28 | 0.02 | < 0.01 | Bal. |
| Comp. 1 | 16.07 | 1.75 | 2.70 | 1.70 | 3.50 | 0.080 | 0.120 | 0.006 | 8.55 | 0.85 | 3.26 | Bal. |
| Comp. 2 | 15.90 | 1.70 | 2.50 | 1.80 | 3.50 | 0.024 | 0.100 | 0.007 | 8.50 | 0.88 | 3.50 | Bal. |

The SAC index was calculated from the values listed in Table 1. The SAC index was 3.78 in Example 1, 5.87 in Comparative Example 1, and 5.99 in Comparative Example 2.

[Tensile test]

The heat-treated first shaped articles of Example 1 and Comparative Example 1 were subjected to a tensile test according to ASTM (American Society for Testing and Materials) E21, and 0.2% offset yield strength, tensile strength, and elongation at break were measured for the heat-treated first shaped articles at 760 °C. The results of the tensile test are shown in Table 2.

[Table 2]

|  | 0.2% offset yield strength (MPa) | Tensile strength (MPa) | Elongation at break (%) |
|---|---|---|---|
| Ex. 1 | 895 | 1075 | 15.2 |
| Comp. 1 | 874 | 1085 | 4.2 |

Table 2 reveals that the high-temperature strength in Example 1 was almost comparable to that in Comparative Example 1.

[Observation of solidification crack amount]

Each of the non-heat-treated second shaped articles of Example 1 and Comparative Examples 1 and 2 was cut along a line passing through the center of the length of the second shaped article, and an image of the cross-section was obtained by means of an optical microscope hereinafter abbreviated as OM (GX53 manufactured by Olympus Corporation). The OM image was processed by thresholding, after which black portions having an area corresponding to 20 or more pixels (the resolution of the imaging was such that each pixel had a width of $0.926\,\mu m$) were extracted as solidification cracks. Subsequently, the Feret diameter of each portion extracted as a solidification crack was measured as the length of that solidification crack. Finally, the sum ($\mu m$) of the lengths of the solidification cracks was divided by the area ($mm^2$) of the region captured in the OM image, and the quotient was defined as the solidification crack amount per unit area ($mm/mm^2$). The results of the observation of the solidification crack amount are shown in Table 3.

[Table 3]

|  | Solidification crack amount ($mm/mm^2$) |
|---|---|
| Ex. 1 | 43.5 |
| Comp. 1 | 421.5 |
| Comp. 2 | 209.5 |

Table 3 reveals that the formation of solidification cracks was reduced in Example 1.

[Test for evaluating heat treatment-induced cracking]

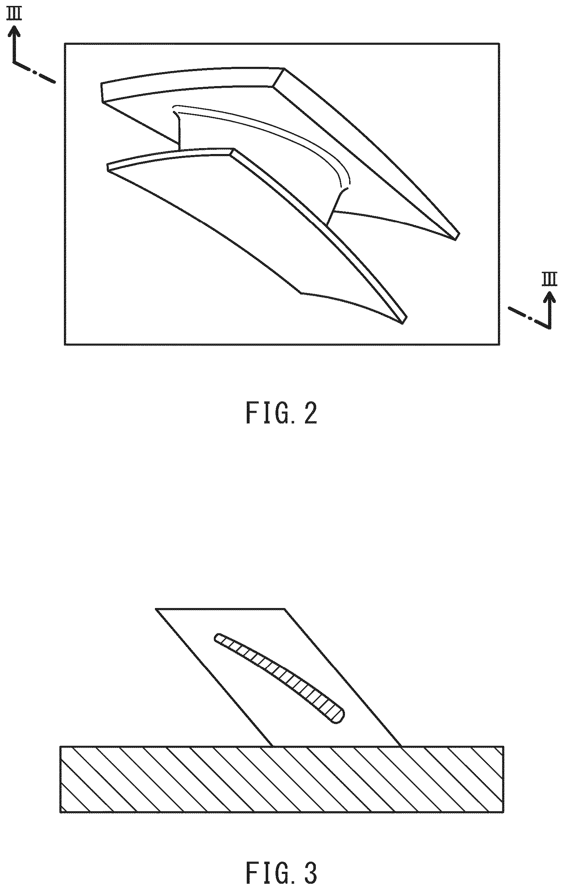

Test specimens were obtained by producing shaped articles on base plates. The production was performed in the same manner as in Example 1 and Comparative Example 2, and the shaped articles had a shape as shown in FIG. 2 or 3. The production conditions such as the laser output were the same as those used for the first shaped articles. Each of the shaped articles includes: two opposing plates extending obliquely from the base plate; and a thin plate located between the opposing plates and connecting the opposing plates to each other. After the production, each test specimen was held at 1204 °C for 2 hours and then slowly cooled to room temperature.

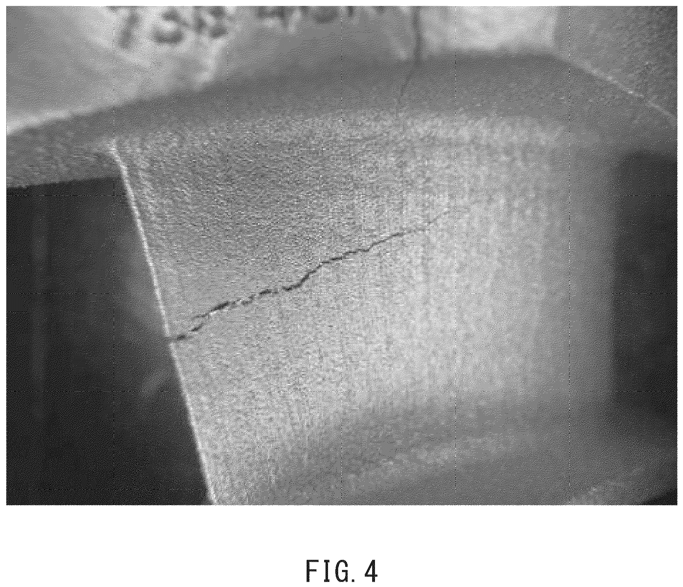

In the test specimen of Comparative Example 2, the thin plate suffered from heat treatment-induced cracking as shown in FIG. 4. In contrast, in the test specimen of Example 1, the thin plate was free of heat treatment-induced cracking. This result demonstrates that heat treatment-induced cracking was prevented in Example 1 where the SAC index was not higher than 3.9. Incidentally, the first shaped articles of Example 1 and Comparative Example 1 were free of heat treatment-induced cracking.

<Summary>

One aspect of the present disclosure provides, as a first mode, a nickel-based superalloy containing, in percent by mass, 13.50% to 15.50% Cr, 5.05% to 5.55% Mo, 5.75% to 6.25% W, 5.90% to 6.40% Ta, 2.70% to 3.00% Al, 0.010% to 0.060% Zr, 0.045% to 0.105% C, 0.002% to 0.010% B, up to 9.00% Co, up to 1.00% Nb, and up to 0.50% Ti.

With this feature, the nickel-based superalloy provided is resistant to heat treatment-induced cracking.

Another aspect of the present disclosure provides, as a second mode, a nickel-based superalloy powder including particles of the nickel-based superalloy.

Yet another aspect of the present disclosure provides, as a third mode, a shaped article production method including: spreading the nickel-based superalloy powder to form a layer; applying an energy beam to the layer to melt and solidify at least a portion of the layer; and repeating the spreading of the nickel-based superalloy powder and the applying of the energy beam to produce a shaped article.

In a fourth mode according to the third mode, for example, the shaped article production method may further include: subjecting the produced shaped article to solution treatment in which the shaped article is held at a temperature of 1150 to 1250 °C for 30 minutes to 5 hours and then cooled to 600 °C or below; and subjecting the shaped article having undergone the solution treatment to aging treatment in which the shaped article is held at a temperature of 600 to 1050 °C for 12 to 48 hours and then cooled to room temperature.

**Reference Signs List**

1    additive manufacturing device
3    nickel-based superalloy powder
5    layer
6    energy beam
7    shaped article

**Claims**

1. A nickel-based superalloy comprising, in percent by mass, 13.50% to 15.50% Cr, 5.05% to 5.55% Mo, 5.75% to 6.25% W, 5.90% to 6.40% Ta, 2.70% to 3.00% Al, 0.010% to 0.060% Zr, 0.045% to 0.105% C, 0.002% to 0.010% B, up to 9.00% Co, up to 1.00% Nb, and up to 0.50% Ti.

2. A nickel-based superalloy powder comprising particles of the nickel-based superalloy according to claim 1.

3. A shaped article production method comprising: spreading the nickel-based superalloy powder according to claim 2 to form a layer; applying an energy beam to the layer to melt and solidify at least a portion of the layer; and repeating the spreading of the nickel-based superalloy powder and the applying of the energy beam to produce a shaped article.

4. The shaped article production method according to claim 3, further comprising: subjecting the produced shaped article to solution treatment in which the shaped article is held at a temperature of 1150 to 1250 °C for 30 minutes to 5 hours and then cooled to 600 °C or below; and subjecting the shaped article having undergone the solution treatment to aging treatment in which the shaped article is held at a temperature of 600 to 1050 °C for 6 to 48 hours and then cooled to room temperature.

FIG. 1

FIG. 2

FIG. 3

FIG. 4

## INTERNATIONAL SEARCH REPORT

| International application No. |
| --- |
| **PCT/JP2024/008048** |

### A. CLASSIFICATION OF SUBJECT MATTER

*C22C 19/05*(2006.01)i; *B22F 1/00*(2022.01)i; *B22F 3/24*(2006.01)i; *B22F 10/28*(2021.01)i; *B22F 10/64*(2021.01)i; *B33Y 10/00*(2015.01)i; *B33Y 70/00*(2020.01)i; *C22F 1/00*(2006.01)i; *C22F 1/10*(2006.01)i

FI: C22C19/05 C; B22F1/00 M; B22F3/24 C; B22F10/28; B22F10/64; B33Y10/00; B33Y70/00; C22C19/05 L; C22F1/00 602; C22F1/00 621; C22F1/00 628; C22F1/00 630A; C22F1/00 650A; C22F1/00 687; C22F1/00 691B; C22F1/00 691C; C22F1/00 692B; C22F1/10 H

According to International Patent Classification (IPC) or to both national classification and IPC

### B. FIELDS SEARCHED

Minimum documentation searched (classification system followed by classification symbols)

C22C19/05; B22F1/00; B22F3/24; B22F10/28; B22F10/64; B33Y10/00; B33Y70/00; C22F1/00; C22F1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-44209 A (SANYO SPECIAL STEEL CO., LTD.) 22 March 2019 (2019-03-22)<br>entire text | 1-4 |
| A | JP 2019-35144 A (MITSUBISHI HITACHI POWER SYSTEMS LTD.) 07 March 2019 (2019-03-07)<br>entire text | 1-4 |
| A | WO 2020/110326 A1 (MITSUBISHI HITACHI POWER SYSTEMS LTD.) 04 June 2020 (2020-06-04)<br>entire text | 1-4 |
| A | JP 2016-3374 A (MITSUBISHI HITACHI POWER SYSTEMS LTD.) 12 January 2016 (2016-01-12)<br>entire text | 1-4 |

☐ Further documents are listed in the continuation of Box C.　　☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 682 276 A1

## INTERNATIONAL SEARCH REPORT
### Information on patent family members

International application No.

**PCT/JP2024/008048**

| Patent document cited in search report | | | Publication date (day/month/year) | Patent family member(s) | | Publication date (day/month/year) |
|---|---|---|---|---|---|---|
| JP | 2019-44209 | A | 22 March 2019 | (Family: none) | | |
| JP | 2019-35144 | A | 07 March 2019 | US 2019/0048451 entire text | A1 | |
| | | | | EP 3441489 | A1 | |
| | | | | CN 109385589 | A | |
| | | | | KR 10-2019-0017664 | A | |
| WO | 2020/110326 | A1 | 04 June 2020 | US 2021/0340644 entire text | A1 | |
| | | | | EP 3685942 | A1 | |
| | | | | CN 111629852 | A | |
| | | | | KR 10-2021-0024119 | A | |
| | | | | JP 6826235 | B2 | |
| JP | 2016-3374 | A | 12 January 2016 | US 2015/0368774 entire text | A1 | |
| | | | | EP 2963135 | A1 | |
| | | | | CN 105200268 | A | |

Form PCT/ISA/210 (patent family annex) (July 2022)

**EP 4 682 276 A1**

## REFERENCES CITED IN THE DESCRIPTION

**Patent documents cited in the description**

- JP 2015224394 A

- JP 6377124 B